# EUROPÄISCHE PATENTSCHRIFT

(11) **EP 2 208 754 B1**
(45) Veröffentlichungstag und Bekanntmachung des Hinweises auf die Patenterteilung: **02.05.2012**
(21) Anmeldenummer: 09180789.1
(22) Anmeldetag: 28.12.2009
(51) Int. Cl.: C08L 23/08, B32B 3/14, B32B 7/12

(54) **Fußbodenbelag für Fahrzeuge zur Personenbeförderung, insbesondere für Flugzeuge**
Floor covering for passenger vehicles, particularly airplanes
Revêtement de sol pour véhicules de transport de personnes, notamment pour avions

(30) Priorität: 19.01.2009 DE 102009005007
(43) Veröffentlichungstag der Anmeldung: 21.07.2010
(73) Patentinhaber: Metzeler Technical Rubber Systems GmbH, 68535 Edingen-Neckarhausen (DE)
(72) Erfinder: Bucksch, Lars, 69214, Eppelheim (DE); Glatter, Manfred, 88239, Wangen (DE); Bormuth, Joachim, 68647, Biblis (DE)
(74) Vertreter: Schober, Christoph D.

(56) Entgegenhaltungen:
- EP-A1- 0 390 647
- EP-A1- 0 742 098
- WO-A1-94/01492
- DE-A1- 4 114 085
- US-A- 5 441 786
- DATABASE WPI Week 199303 Thomson Scientific, London, GB; AN 1993-021635 XP002580771 & JP 4 347633 A (NIPPON PETROCHEMICALS CO LTD) 2. Dezember 1992 (1992-12-02)
- DATABASE WPI Week 199105 Thomson Scientific, London, GB; AN 1991-032457 XP002580772 & JP 2 301434 A (HITACHI CABLE LTD) 13. Dezember 1990 (1990-12-13)
- DATABASE WPI Week 200834 Thomson Scientific, London, GB; AN 2008-E92925 XP002580773 & JP 2008 081969 A (DAINIPPON PRINTING CO LTD) 10. April 2008 (2008-04-10)

## Beschreibung

Die vorliegende Erfindung betrifft einen Fußbodenbelag für Fahrzeuge zur Personenbeförderung, insbesondere für Flugzeuge.

Fußbodenbeläge, die in Transportmitteln für die Personenbeförderung, wie zum Beispiel Flugzeuge, Bahnen oder Schiffe, eingesetzt werden, unterliegen hohen Anforderungen. Um den auftretenden hohen Belastungen standzuhalten, müssen die Fußbodenbeläge in der Regel über eine hohe Abriebfestigkeit verfügen. Darüberhinaus ist aus Sicherheitsgründen eine flammwidrige Ausgestaltung unerläßlich. So müssen Fußbodenbeläge, die in Flugzeugen Anwendung finden, insbesondere den allgemeinen Voraussetzungen die in den FAR-Normen festgelegt sind entsprechen und im speziellen die von Airbus grundsätzlich geforderte Norm ABD 0031 erfüllen.

Ein Fußbodenbelag, der aus einer unteren Schicht, einer Primerschicht und einer flammwidrigen Polysiloxanschicht aufgebaut ist, ist aus der EP 0 115 869 A2 bekannt. Die untere Schicht besteht aus einem Phenolharzlaminat, das mit einer Faserverstärkung versehen ist. Die flammwidrige Polysiloxanschicht besteht aus einem Diorganopolysiloxan, fein zerteilter Kieselsäure und/oder anderen Füllstoffen, fein verteiltemTitandioxyd, Platin, einem Härtungsmittel sowie einer Stickstoffverbindung. Die flammwidrige Polysiloxanschicht ist auf die Laminatschicht aufvulkanisiert.

Darüber hinaus ist aus der EP 0 473 734 B1 ein Fußbodenbelag bekannt, der eine obere Nutzschicht, ein darunterliegendes flexibles Flächengebilde sowie eine mit dem flexiblen Flächengebilde verbundene, selbstklebende Beschichtung aufweist. Die Nutzschicht besteht aus einem flammwidrigen Polysiloxan, dessen Zusammensetzung aus der EP 0 115 869 A2 bekannt ist, sowie aus einer in das Polysiloxan eingebetteten Glasgewebeschicht. Das flexible Flächengebilde besteht aus Phenol-Aldehyd-Fasern und ist mit der Polysiloxanschicht mittels Vulkanisation fest verbunden. An der Unterseite des flexiblen Flächengebildes ist die selbstklebende Beschichtung aufgebracht.

Aus der EP 0 893 469 A1 geht ein flammenresistentes halogenfreies Polymerstoffgemisch hervor, das als Draht- und Kabelummantelung oder als Fußbodenplatte verwendet wird. Das Stoffgemisch weist 1 Gew.-% bis 60 Gew.-% Ethylen-Vinylacetat-Carbon-Monoxid-Terpolymer, 1 Gew.-% bis 50 Gew.-% Etylen-Vinylacetat oder Polyolefin, sowie weitere 1 Gew.-% bis 50 Gew.-% Etylen-Vinylacetat oder Polyolefin, jedoch mit 0,05 Gew.-% bis 3 Gew.-% Carbonsäure oder Anhydride und 20 Gew.-% bis 85 Gew.-% eines organischen Füllers auf. Die anorganischen Füllstoffe können Flammschutzmittel sowie weitere Füllstoffe umfassen.

In der EP 1 104 7 83 A1 ist ein Boden- oder Wandbelag offenbart. Der Boden oder Wandbelag ist aus Kunststoff, Füllstoffen und Hilfsstoffen gebildet, wobei der Kunststoffanteil 16 Gew.-% bis 50 Gew.-% beträgt. Bei dem Kunststoff handelt es sich um weichmacherfreies Polyvinylbutyral und Ethylen-Vinylacetat-Copolymer. Als Hilfsstoffe könnenflammschutzmittel eingesetzt werden.

Des Weiteren geht aus der DE 37 13 671 A1 eine flammwidrige, halogenfreie thermoplastische Polymermasse hervor. Die Polymermasse weist 20 Gew.-Teile bis 50 Gew.-Teile Ethylen-Vinylacetat-Copolymer (I), 80 Gew.-Teile bis 50 Gew.-Teile Ethylen-Vinylacetat-Copolymer (II), 150 Gew.-Teile bis 120 Gew.-Teile mineralische Füllstoffe und Verarbeitungshilfsmittel sowie Additive auf. Die mineralischen Füllstoffe umfassen bevorzugt Flammschutzmittel. Die Polymermasse wird überall dort verwendet, wo in Form von Platten, Bahnen oder Schläuchen eine Polymerabdeckschicht von guter Flammwidrigkeit und guten mechanischen Eigenschaften gefordert ist.

Aus der KR 2005 038 108 A geht ein Stoffgemisch hervor, das gute Dämpfungseigenschaften hat und als Automatte eingesetzt wird. Hierzu weist das Stoffgemisch 6 Gew.-% bis 20 Gew.-% Ethylen-Vinylacetat-Copolymer, 8 Gew.-% bis 15 Gew.-% Phenolharz sowie weitere Füllstoffe enthält.

WO 94/01492 A1 offenbart ein feuerhemmendes Material in Form einer Platte. Das feuerhemmende Material weist eine Mischung aus Ethylen-Vinylacetat-Copolymer, Glasmasse, Aluminiumhydroxid und ein Magnesiumgemisch auf. Die Mischung umfasst 100 Gewichtsteile Ethylen-Vinylacetat-Copolymer, das einen Vinylacetatgehalt von 40 Gew.-% aufweist, 25 Gewichtsteile einer Mischung aus Glasmasse, 170 Gewichtsteile Aluminiumhydroxid, das eine Korngröße von 1 µm aufweist, 120 Gewichtsteile Magnesiumhydroxid, das eine Korngröße kleiner als 1 µm und eine spezifische Oberfläche von 20 m²/g hat, 65 Gewichtsteile Füllstoffe, 10 Gewichtsteile Pigmente und 10 Gewichtsteile Verarbeitungshilfsmittel. Das feuerhemmende Material kann als Fußbodenbelag für Fahrzeuge verwendet werden.

Der Erfindung liegt die Aufgabe zugrunde, einen Fußbodenbelag zu schaffen, der bei einer kostengünstigen Herstellung über ein geringes Flächengewicht sowie eine hohe Flammfestigkeit und Abriebfestigkeit verfügt.

Diese Aufgabe wird durch einen Fußbodenbelag gemäß Anspruch 1 gelöst. Vorteilhafte Ausgestaltungen der Erfindung sind Gegenstand der Ansprüche 2 bis 14.

Der erfindungsgemäße Fußbodenbelag eignet sich insbesondere für den Einsatz bei Flugzeugen und umfasst wenigstens eine Deckschicht. Die Deck-schicht besteht aus einem Stoffgemisch, das 30 Gew.-% bis 60 Gew.-% Ethylen-Vinylacetat-Copolymer (EVM), 2 Gew.-% bis 70 Gew.-% Flammschutzmittel, das eine spezifische Oberfläche nach BET hat, die zwischen 0,2 m²/g und 50 m²/g beträgt, und 4 Gew.-% bis 20 Gew.-% Füllstoffe um-fasst. Ein derartiger Fußbodenbelag zeichnet sich durch eine geringe Entflammbarkeit sowie durch eine hohe Abriebfestigkeit aus. Des Weiteren ist der Fußbodenbelag kostengünstig in der Herstellung und weist aufgrund seines einlagigen Aufbaus ein geringes Flächengewicht auf. Die spezifische Oberflächenbeschaffung gewährleistet, dass das Flammschutzmittel gleichmäßig in das Stoffgemisch eingebettet wird.

In einer vorteilhaften Ausgestaltung der Erfindung beträgt der Anteil an Ethylen-Vinylacetat-Copolymer im Stoffgemisch zwischen 45 Gew.-% und 55 Gew.-%. Der hohe Anteil an Ethylen-Vinylacetat-Copolymer gewährleistet eine hohe Flammfestigkeit und demzufolge geringe Entflammbarkeit. Zudem stellt sich ein hoher Trittkomfort infolge der erhöhten Abfederung des Fußbodenbelags ein.

ber Anteil an Vinylacetat im Ethylen-Vinylacetat-Copolymer beträgt erfindungsgemäß zwischen 50 Gew.-% und 70 Gew:-%. Der erhöhte Vinylacetatgehalt ermöglicht eine sehr gute Ölbeständigkeit sowie einen niedrigen Druckverformungsrest bei erhöhten Temperaturen.

In einer weiteren vorteilhaften Ausgestaltung der Erfindung beträgt die Mooney-Viskosität ML (11/100 °C) des Ethylen-Vinylacetat-Copolymers zwischen 10 Mooney-Einheiten und 80 Mooney-Einheiten, vorzugsweise zwischen 20 Mooney-Einheiten und 60 Mooney-Einheiten.

Vorteilhafterweise beträgt der Anteil an Flammschutzmittel im Stoffgemisch zwischen 20 Gew.-% und 80 Gew.-%, vorzugsweise zwischen 40 Gew.-% und 60 Gew.-%. Das Flammschutzmittel verhindert durch seine chemischen Zersetzungsprodukte den unmittelbaren Zutritt von Sauerstoff zum Brandherd und sorgt dafür, dass der Brand punktuell erlischt.

In einer weiteren vorteilhaften Ausgestaltung der Erfindung ist das Flammschutzmittel frei von Halogenen. Im Brandfall entstehen so keine halogenhaltigen Zersetzungsprodukte, die toxisch und korrosiv wirken können.

Das Flammschutzmittel hat vorteilhafterweise einen mittleren Korndurchmesser, der zwischen 0,2 µm und 50 µm, vorzugsweise zwischen 15 µm und 30 µm, beträgt. Dieser Korndurchmesser bewirkt eine gleichmäßige Verteilung des Flammschutzmittels im Stoffgemisch, so dass im Brandfall eine gleichmäßige Wirkung des Brandschutzmittels sichergestellt wird.

In einer weiteren vorteilhaften Ausgestaltung der Erfindung beträgt die spezifische Oberfläche nach BET zwischen 0,2 m²/g und 22 m²/g, insbesondere zwischen 5 m²/g und 15 m²/g.

Das Flammschutzmittel hat vorteilhafterweise eine Ölaufnahme, die zwischen 10 mg/100g und 65 mg/100g, vorzugsweise zwischen 25 mg/100g und 40 mg/100g, beträgt.

In einer weiteren vorteilhaften Ausgestaltung der Erfindung beträgt der Anteil an Füllstoffen zwischen 5 Gew.-% und 18 Gew.-%, vorzugsweise zwischen 8 Gew.-% und 16 Gew.-%. Die Füllstoffe beeinflussen die mechanischen Eigenschaften des Fußbodenbelags.

In einer weiteren vorteilhaften Ausgestaltung der Erfindung weist das Stoffgemisch Additive auf.

Das Stoffgemisch weist vorteilhafterweise Verarbeitungshilfsmittel auf.

Vorteilhafterweise ist die Deckschicht aus einer Vielzahl an Bahnen zusammengesetzt, die nebeneinander angeordnet sind. Diese Zusammensetzung ermöglicht die Herstellung von Fußbodenbelägen in den von den Verwendern vorgegebenen Abmaßen.

In einer weiteren vorteilhaften Ausgestaltung umfasst der Fußbodenbelag zusätzlich eine Tragschicht und eine Klebstoffschicht, wobei die Deckschicht mittels der Klebstoffschicht auf der Tragschicht aufgebracht ist. Die Tragschicht sorgt für eine hohe Stabilität und Steifigkeit des Fußbodenbelags.

Vorteilhafterweise besteht die Tragschicht aus Phenolharzlaminat und/oder aus einem Cyanat-Ester-Laminat und/oder aus einem Gewebe, um eine praxisgerechte Ausgestaltung sicherzustellen.

Die Tragschicht ist vorteilhafterweise aus einer Vielzahl an Bahnen zusammengesetzt, die nebeneinander angeordnet sind. Diese Zusammensetzung ermöglicht die Herstellung von Fußbodenbelägen in den von den Verwendern vorgegebenen Abmaßen.

Vorzugsweise sind die Bahnen der Deckschicht und die Bahnen der Tragschicht versetzt zueinander angeordnet. Infolge der versetzten Anordnung beider Schichten zueinander wird eine absolute Flüssigkeitsdichte des Fußbodenbelags hergestellt.

Vorzugsweise ist zwischen den Bahnen der Deckschicht ein Verbindungsmittel angeordnet. Das Verbindungsmittel sorgt dafür, dass die einzelnen Bahnen der Deckschicht stoffschlüssig miteinander zu einem großflächigen Fußbodenbelag verbunden werden können.

In einer weiteren vorteilhaften Ausgestaltung verbindet eine Schutzfolie die Bahnen der Tragschicht miteinander. Hierdurch werden die Bahnen der Tragschicht zusätzlich zueinander fixiert, so dass eine hohe Stabilität sichergestellt ist.

Die zweckmäßigerweise auf der der Klebstoffschicht abgewandten Seite der Tragschicht angeordnete Schutzfolie besteht vorteilhafterweise aus einem Aluminiumband oder Polypropylen. Derartige Schutzfolien zeichnen sich durch eine hohe Temperaturbeständigkeit sowie hohe Reißfestigkeit aus.

In einer weiteren vorteilhaften Ausgestaltung umfasst der Fußbodenbelag einen ersten Fußbodenabschnitt, der sich aus einer Deckschicht, einer Tragschicht und einer Klebstoffschicht zusammensetzt, und einen zweiten Fußbodenabschnitt, der sich ebenfalls aus einer Deckschicht, einer Tragschicht und einer Klebstoffschicht zusammensetzt. Der erste Fußbodenabschnitt und der zweite Fußbodenabschnitt sind nebeneinander angeordnet und durch ein Verbindungsmittel miteinander verbunden. Das Zusammenfügen einzelner Fußbodenabschnitte zu einem Fußbodenbelag ermöglicht ein einfaches Verlegen eines großflächigen Fußbodenbelags, da die einzelnen Fußbodenabschnitte vorgefertigt werden können, so dass ein langwieriges Verlegen und Verkleben der einzelnen Bahnen am Einsatzort entfällt.

Vorteilhafterweise verbindet eine Schutzfolie die Tragschicht des ersten Fußbodenabschnitts und die Tragschicht des zweiten Fußbodenabschnitts miteinander. Die Schutzfolie gewährleistet eine weitere Fixierung der Fußbodenabschnitte nebeneinander.

In einer weiteren vorteilhaften Ausgestaltung weist der Fußbodenbelag ein Flächengewicht von 2 kg/m² bis 3 kg/m² auf. Ein derart geringes Flächengewicht trägt bei Transportmitteln zu einer Treibstoffersparnis bei, die im Zuge der stetig steigenden Energiekosten von immer größerer Bedeutung ist.

Vorteilhafterweise weist der Fußbodenbelag eine Höhe von 1 mm bis 3 mm, vorzugsweise von 1,2 mm bis 2 mm, auf.

Die Erfindung wird nachfolgend anhand von Ausführungsbeispielen näher erläutert, die in den schematischen Zeichnungen dargestellt sind. Hierbei zeigen:
- Fig. 1:: einen Querschnitt durch eine erste Ausführungsform des erfin- dungsgemäßen Fußbodenbelags;
- Fig. 2:: einen Querschnitt durch eine zweite Ausführungsform des er- findungsgemäßen Fußbodenbelags;
- Fig. 3:: einen Querschnitt durch eine dritte Ausführungsform des erfin- dungsgemäßen Fußbodenbelags und
- Fig. 4:: einen Querschnitt durch eine vierte Ausführungsform des erfin- dungsgemäßen Fußbodenbelags.

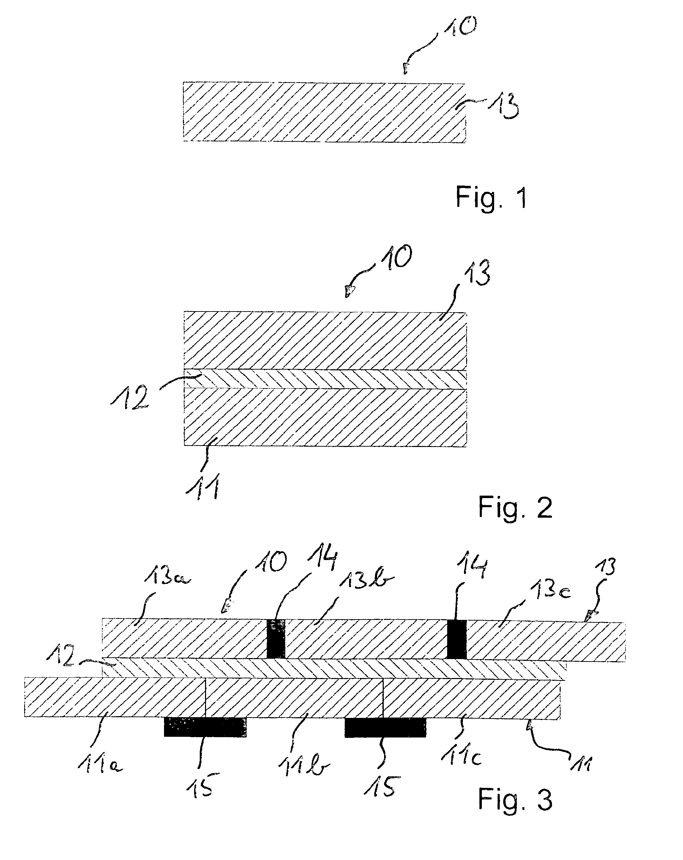

Aus Fig. 1 geht ein flammhemmender Fußbodenbelag 10 hervor, der insbesondere überall dort zum Einsatz kommt, wo ein flammfester Belag erforderlich ist und eine hohe Beanspruchung infolge starken Abriebs vorliegt, wie zum Beispiel in Passagierflugzeugen. Zudem muss der Fußbodenbelag 10 ein optisch anspruchsvolles Erscheinungsbild während seiner gesamten Lebensdauer gewährleisten. Der Fußbodenbelag 10 umfasst gemäß Fig. 1 eine Deckschicht, die aus einem Stoffgemisch mit Ethylen-Vinylacetat, Flammschutzmittel und Füllstoffen besteht.

Die Deckschicht 13 zeichnet sich vor allem durch ihren hohen EVM-Gehalt aus, was zu einer außergewöhnlich hohen Verschleißfestigkeit führt, die bei herkömmlichen Materialien in Kombination mit Flammschutzmitteln nicht gewährleistet ist.

Die in der Deckschicht 13 verwendeten Flammschutzmittel sind frei von Halogenen. Im Gegensatz zu halogenierten Flammschutzmitteln entstehen bei der Verwendung von halogenfreien Flammschutzmitteln keine halogenhaltigen Zersetzungsprodukte, die eine sehr hohe Toxizität und Korrosivität besitzen.

Des Weiteren beinhaltet die Deckschicht 13 anorganische Füllstoffe, wie beispielsweise Kieselsäure oder Kreide, die mit Farbpigmenten zusammen eine farbliche Anpassung des Fußbodenbelags ermöglichen.

In Fig. 2 ist eine weitere Ausführungsform eines flammhemmenden Fußbodenbelags 10 dargestellt, der überall dort zum Einsatz kommt, wo erhöhte Anforderungen an die Beständigkeit im Brandfall gestellt werden, wie beispielsweise im Flugzeugbau. Der Fußbodenbelag 10 gemäß Fig. 2 weist neben der Deckschicht 13 eine Tragschicht 11 und eine Klebstoffschicht 12 auf.

Die Tragschicht 11, auch Backing genannt, kann aus Phenolharzlaminat, aus Cyanat-Ester-Laminat oder einem Gewebe bestehen. Die Tragschicht 11 dient als stabile Unterlage der Deckschicht 13 und sorgt so für eine hohe Stabilität und Steifigkeit des Fußbodenbelags 10. Zudem gewährleistet die Tragschicht 11 eine ausreichende Haftung der darauf aufgebrachten Klebstoffschicht 12. Des Weiteren spaltet sowohl die Tragschicht 11 als auch die Deckschicht 13 im Brandfall keine toxischen Stoffe ab und weist eine geringe Rauchgasdichte auf.

Für die zwischen der Tragschicht 11 und der Deckschicht 13 aufgebrachte Klebstoffschicht 12 wird ein bei Raumtemperatur vernetzender Kleber verwendet. Nachdem die Klebstoffschicht 12 auf die Tragschicht 11 aufgetragen worden ist, wird die Deckschicht 13 auf die Klebstoffschicht 12 gelegt und verpresst. Das Auftragen der Klebstoffschicht 12 und das Verpressen der Deckschicht 13 mit der Klebstoffschicht 12 erfolgt nach bekannten Verfahren. Die in Fig. 3 dargestellte Ausführungsform eines flammhemmenden Fußbodenbelags 10 umfasst eine Deckschicht 13 und eine Tragschicht 11, die jeweils aus einer Vielzahl an Bahnen 13a, 13b, 13c; 11 a, 11 b, 11 c zusammengesetzt sind. Die Bahnen der Deckschicht 13a, 13b, 13c sind versetzt zu den Bahnen der Tragschicht 11 a, 11 b, 11 c angeordnet. Zunächst werden die Bahnen 11 a, 11 b, 11 c der Tragschicht 11 auf Stoß aneinander gelegt, wobei auf einer Seite im Stoßbereich zweier Bahnen 11 a, 11 b; 11 b, 11 c der Tragschicht 11 eine Schutzfolie 15 aufgebracht wird. Die Schutzfolie 15 sorgt dafür, dass die zwei Bahnen 11a, 11b; 11b, 11c der Tragschicht 11 miteinander verbunden werden. Nachdem die einzelnen Bahnen 11a, 11b, 11c der Tragschicht 11 zu einer großflächigen Einheit verbunden sind, wird auf der der Schutzfolie 15 abgewandten Seite der Tragschicht 11 eine Klebstoffschicht 12 aufgetragen. Anschließend werden die einzelnen Bahnen 13a, 13b, 13c der Deckschicht 13 versetzt zu den Bahnen 11 a, 11 b, 11 c der Tragschicht 11 auf die Klebstoffschicht 12 aufgesetzt, wobei zwischen den Bahnen 13a, 13b, 13c der Deckschicht 13 ein Spalt freigelassen wird, wie in Fig. 3 dargestellt. Schließlich werden die Spalte zwischen den Bahnen 13a, 13b; 13b, 13c der Deckschicht 13 mit einem Verbindungsmittel 14 gefüllt.

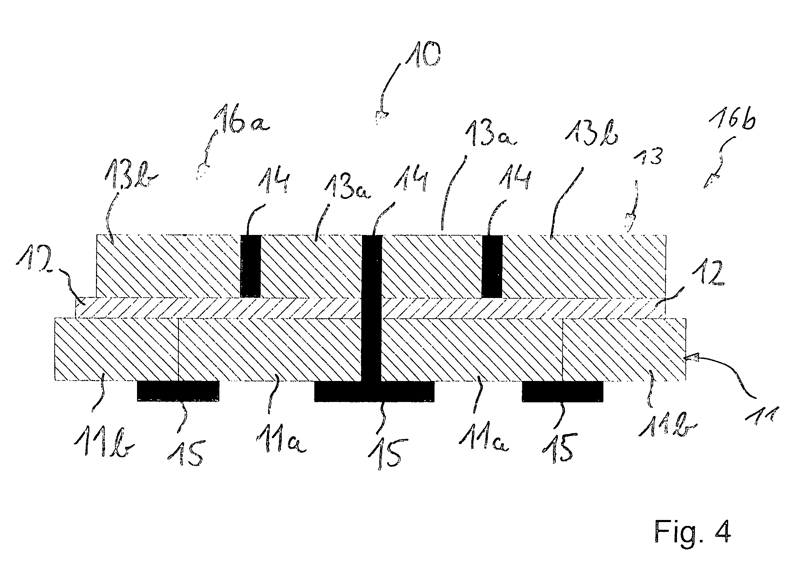

Eine weitere Ausführungsform eines flammhemmenden Fußbodenbelags 10 ist in Fig. 4 dargestellt. Der Fußbodenbelag 10 ist aus einzelnen Fußbodenabschnitten 16a, 16b die jeweils aus einer Deckschicht 13, einer Tragschicht 11 und einer Klebstoffschicht 12 zusammengesetzt sind, aufgebaut. Die einzelnen Fußbodenabschnitte 16a, 16b werden vor dem Verlegen des Fußbodenbelags 10 vorgefertigt und anschließend vor Ort verlegt. Hierzu werden die einzelnen Fußbodenabschnitte 16a, 16b mit Hilfe des Verbindungsmittels 14 miteinander verbunden. Zusätzlich werden die Tragschichten 11 über die Schutzfolie 15 verbunden.

Der vorstehend beschriebene Fußbodenbelag 10 findet überall dort Anwendung, wo ein flammfester Belag erforderlich ist, der hohen Belastungen standhalten soll. Hierbei kann zwischen der in Fig. 1 dargestellten einlagigen Variante und der in den Fig. 2 bis 4 gezeigten mehrlagigen Variante unterschieden werden. Die einlagige Variante wird beispielsweise in Zügen, Schiffen oder Fähren verwendet. Die mehrlagige Variante wird vor allem in Flugzeugen eingesetzt, da hier höhere Sicherheitsanforderungen im Brandfall gefordert werden.

Der Fußbodenbelag 10 zeichnet sich durch sein geringes Flächengewicht und seine positiven Eigenschaften im Brandfall aus. Zudem ermöglicht die Deckschicht 13 aus EVM einen hohen Trittkomfort, eine hohe Widerstandsfähigkeit gegen Abrieb sowie eine hohe Farbbeständigkeit.

### Bezugszeichenliste

- 10: Fußbodenbelag
- 11: Tragschicht
- 11 a: Bahn der Tragschicht
- 11 b: Bahn der Tragschicht
- 11 c: Bahn der Tragschicht
- 12: Klebstoffschicht
- 13: Deckschicht
- 13a: Bahn der Deckschicht
- 13b: Bahn der Deckschicht
- 13c: Bahn der Deckschicht
- 14: Verbindungsmittel
- 15: Schutzfolie
- 16a: Fußbodenabschnitt
- 16b: Fußbodenabschnitt

## Patentansprüche

1. Fußbodenbelag für Fahrzeuge zur Personenbeförderung,
insbesondere für Flugzeuge, umfassend wenigstens eine Deckschicht (13),
wobei die Deckschicht (13) aus einem Stoffgemisch besteht, das umfasst:
30 Gew.-% bis 60 Gew.-% Ethylen-Vinylacetat-Copolymer,
2 Gew.-% bis 70 Gew.-% Flammschutzmittel und
4 Gew.-% bis 20 Gew.-% Füllstoffe;
wobei der Anteil an Vinylacetat im Ethylen-Vinylacetat-Copolymer zwischen 50 Gew.-% und 70 Gew.-% beträgt,
wobei das Flammschutzmittel eine spezifische Oberfläche nach BET hat, die zwischen 0,2 m²/g und 50 m²/g beträgt, und
wobei der Fußbodenbelag ein Flächengewicht von 1 kg/m² bis 4 kg/m² hat.

2. Fußbodenbelag nach Anspruch 1, **dadurch gekennzeichnet, dass** der Anteil an Ethylen-Vinylacetat-Copolymer im Stoffgemisch zwischen 30 Gew.-% und 60 Gew.-%, vorzugsweise zwischen 45 Gew.-% und 55 Gew.-%, beträgt, wobei die Mooney-Viskosität ML(1+4/100 °C) des Ethylen-Vinylacetat-Copolymers vorzugsweise zwischen 10 Mooney-Einheiten und 80 Mooney-Einheiten, vorzugsweise zwischen 20 Mooney-Einheiten und 60 Mooney-Einheiten, beträgt.

3. Fußbodenbelag nach einem der Ansprüche 1 oder 2, **dadurch gekennzeichnet, dass** der Anteil an Flammschutzmittel im Stoffgemisch zwischen 20 Gew.-% und 80 Gew.-%, vorzugsweise zwischen 40 Gew.% und 60 Gew.-%, beträgt, wobei das Flammschutzmittel vorzugsweise frei von Halogenen ist.

4. Fußbodenbelag nach einem der Ansprüche 1 bis 3, **dadurch gekennzeichnet, dass** das Flammschutzmittel einen mittleren Korndurchmesser hat, der zwischen 0,2 µm und 50 µm, vorzugsweise zwischen 0,5 µm und 10 µm, beträgt, wobei vorzugsweise die spezifische Oberfläche nach BET zwischen 0,2 m²/g und 22 m²/g, insbesondere zwischen 5 m²/g und 15 m²/g, beträgt und wobei vorzugsweise das Flammschutzmittel eine Ölaufnahme hat, die zwischen 10 mg/100g und 65 mg/100g, vorzugsweise zwischen 25 mg/100g und 40 mg/100g, beträgt.

5. Fußbodenbelag nach einem der Ansprüche 1 bis 4, **dadurch gekennzeichnet, dass** der Anteil an Füllstoffen zwischen 5 Gew.-% und 18 Gew.-%, vorzugsweise zwischen 8 Gew.-% und 16 Gew.-%, beträgt, wobei die Füllstoffe vorzugsweise anorganisch sind.

6. Fußbodenbelag nach einem der Ansprüche 1 bis 5, **dadurch gekennzeichnet, dass** das Stoffgemisch Additive und vorzugsweise Verarbeitungshilfsmittel aufweist.

7. Fußbodenbelag nach einem der Ansprüche 1 bis 6, **dadurch gekennzeichnet, dass** die Deckschicht (13) aus einer Vielzahl an Bahnen (13a, 13b, 13c) zusammengesetzt ist, die nebeneinander angeordnet sind.

8. Fußbodenbelag nach einem der Asprüche 1 bis 7, **gekennzeichnet durch**
eine Tragschicht (11) und
eine Klebstoffschicht (12);
wobei die Deckschicht (13) mittels der Klebstoffschicht (12) auf der Tragschicht (11) aufgebracht ist.

9. Fußbodenbelag nach Anspruch 8, **dadurch gekennzeichnet, dass** die Tragschicht (11) aus Phenolharzlaminat und/oder einem Cyanat-Esther-Laminat und/oder einem Gewebe besteht, wobei die Tragschicht (11) vorzugsweise aus einer Vielzahl an Bahnen (11a, 11 b, 11 c) zusammengesetzt ist, die nebeneinander angeordnet sind.

10. Fußbodenbelag nach Anspruch 9, **dadurch gekennzeichnet, dass** die Bahnen (13a, 13b, 13c) der Deckschicht (13) und die Bahnen (11 a, 11 b, 11 c) der Tragschicht (11) versetzt zueinander angeordnet sind.

11. Fußbodenbelag nach einem der Ansprüche 7 bis 10, **gekennzeichnet durch** ein Verbindungsmittel (14), das zwischen den Bahnen (13a, 13b, 13c) der Deckschicht (13) angeordnet ist, und vorzugsweise **gekennzeichnet durch** eine Schutzfolie (15), welche die Bahnen (11a, 11 b, 11 c) der Tragschicht (11) miteinander verbindet.

12. Fußbodenbelag nach Anspruch 11, **dadurch gekennzeichnet, dass** die Schutzfolie (15) auf der der Klebstoffschicht (12) abgewandten Seite der Tragschicht (11) angebracht ist, wobei die Schutzfolie (15) vorzugsweise aus einem Aluminium-Band oder Polypropylen besteht.

13. Fußbodenbelag nach einem der Ansprüche 1 bis 12, **gekennzeichnet durch** einen ersten Fußbodenabschnitt (16a), der sich aus einer Deckschicht (13a), einer Tragschicht (11a) und einer Klebstoffschicht (12) zusammensetzt, und einen zweiten Fußbodenabschnitt (16b), der sich aus einer Deckschicht (13b), einer Tragschicht (11 b) und einer Klebstoffschicht (12) zusammmensetzt, wobei der erste Fußbodenabschnitt (16a) und der zweite Fußbodenabschnitt (16b) nebeneinander angeordnet sind und **durch** ein Verbindungsmittel (14) miteinander verbunden sind und wobei vorzugsweise die Tragschicht (11a) des ersten Fußbodenbabschnitts (16a) und die Tragschicht (11 b) des zweiten Fußbodenbaschnitts (16b) **durch** eine Schutzfolie (15) miteinander verbunden sind.

14. Fußbodenbelag nach einem der Ansprüche 1 bis 13, **gekennzeichnet durch** vorzugsweise ein Flächengewicht von 2 kg/m² bis 3 kg/m², und vorzugsweise **gekennzeichnet durch** eine Höhe von 1 mm bis 3 mm, vorzugsweise von 1,2 mm bis 2,0 mm.

## Claims

1. Floor covering for passenger vehicles,
in particular for aircraft, comprising at least one covering layer (13),
wherein the covering layer (13) is made of a mixture of materials comprising:
30% by weight to 60% by weight of ethylene-vinyl acetate copolymer,
2% by weight to 70% by weight of flame retardant and
4% by weight to 20% by weight of fillers;
wherein the proportion of vinyl acetate in the ethylene-vinyl acetate copolymer is between 50% by weight and 70% by weight,
wherein the flame retardant has a specific surface area in accordance with BET, which is between 0.2 m²/g and 50 m²/g, and
wherein the floor covering has a weight per unit area of 1 kg/m² to 4 kg/m².

2. Floor covering according to claim 1, **characterised in that** the proportion of ethylene-vinyl acetate copolymer in the materials mixture is between 30% by weight and 60% by weight, preferably is between 45% by weight and 55% by weight, wherein the Mooney viscosity ML (1 +4 /100° C) of the ethylene-vinyl acetate copolymer is preferably between 10 Mooney units and 80 Mooney units, preferably between 20 Mooney units and 60 Mooney units.

3. Floor covering according to one of the claims 1 or 2, **characterised in that** the proportion of flame retardant in the materials mixture is between 20% by weight and 80% by weight, preferably between 40% by weight and 60% by weight, wherein the flame retardant is preferably free of halogens.

4. Floor covering according to one of the claims 1 to 3, **characterised in that** the flame retardant has a mean grain diameter of between 0.2 µm and 50 µm, preferably between 0.5 µm and 10 µm, wherein preferably the specific surface area in accordance with BET is between 0.2 m²/g and 22 m²/g, in particular between 5 m²/g and 15 m²/g, and wherein preferably the flame retardant has an oil absorption which is between 10 mg/100g and 65 mg/100g, preferably between 25 mg/100g and 40 mg/100g.

5. Floor covering according to one of the claims 1 to 4, **characterised in that** the proportion of fillers is preferably between 5% by weight and 18% by weight, preferably between 8% by weight and 16% by weight, wherein the fillers are preferably inorganic.

6. Floor covering according to one of the claims 1 to 5, **characterised in that** the materials mixture contains additives and preferably processing aids.

7. Floor covering according to one of the claims 1 to 6, **characterised in that** the covering layer (13) consists of a plurality of strips (13a, 13b, 13c) arranged alongside each other.

8. Floor covering according to one of the claims 1 to 7, **characterised by**
a supporting layer (11) and
an adhesive layer (12);
wherein the covering layer (13) is attached to the supporting layer (11) by means of the adhesive layer (12).

9. Floor covering according to claim 8, **characterised in that** the supporting layer (11) is made of phenolic resin laminate and / or a cyanate-ester laminate and / or a woven fabric, wherein the supporting layer (11) preferably is made up of a plurality of strips (11a, 11 b, 11c) which are arranged alongside each other.

10. Floor covering according to claim 9, **characterised in that** the strips (13a, 13b, 13c) of the covering layer (13) and the strips (11a, 11b, 11 c) of the supporting layer (11) are arranged offset to one another.

11. Floor covering according to one of the claims 7 to 10, **characterised by** a connecting means (14) arranged between the strips (13a, 13b, 13c) of the covering layer (13), and preferably **characterized by** a protective film (15) which connects the strips (11a, 11b, 11c) of the supporting layer (11) with each other.

12. Floor covering according to claim 11, **characterised in that** the protective film (15) is attached to the side of the supporting layer (11) facing away from the adhesive layer (12), wherein the protective film (15) is preferably made of an aluminium tape or polypropylene.

13. Floor covering according to one of the claims 1 to 12, **characterised by** a first floor section (16a), which is composed of a covering layer (13a), a supporting layer (11a) and an adhesive layer (12), and a second floor section (16b) composed of a covering layer (13b), a supporting layer (11b) and an adhesive layer (12), wherein the first floor section (16a) and the second floor section (16b) are arranged side by side and are connected by a connecting means (14) and wherein preferably the supporting layer (11a) of the first floor section (16a) and the supporting layer (11b) of the second floor section (16b) are connected by a protective film (15).

14. Floor covering according to one of claims 1 to 13, **characterised by** a weight per unit area preferably of 2 kg/m² to 3 kg/m², and preferably **characterised by** a height of 1 mm to 3 mm, preferably from 1.2 mm to 2.0 mm.

## Revendications

1. Revêtement de sol pour véhicules de transport de personnes, en particulier pour avion, comprenant au moins une couche de recouvrement (13),
dans lequel la couche de recouvrement (13) est constituée d'un mélange de matériaux qui inclut :
30 % en poids à 60 % en poids de copolymère éthylène-vinyle-acétate,
2 % en poids à 70 % en poids de produit de protection pare-flammes, et
4 % en poids à 20 % en poids de produit de charge ;
dans lequel la part de vinyle-acétate dans le copolymère éthylène-vinyle-acétate est entre 50 % en poids et 70 % en poids,
le produit de protection pare-flammes possède une surface spécifique, selon BET, qui s'élève entre 0,2 m²/g et 50 m²/g, et
dans lequel le revêtement de sol présente un poids de surface de 1kg/m² à 4kg/m².

2. Revêtement de sol selon la revendication 1, **caractérisé en ce que** la part de copolymère éthylène-vinyle-acétate dans le mélange de matériaux s'élève entre 30 % en poids et 60 % en poids, de préférence entre 45 % en poids et 55 % en poids, et dans lequel la viscosité de Mooney ML (1+4/100°C) du copolymère éthylène-vinyle-acétate s'élève de préférence entre 10 unités Mooney et 80 unités Mooney, de préférence entre 20 unités Mooney et 60 unités Mooney.

3. Revêtement de sol selon l'une des revendications 1 ou 2, **caractérisé en ce que** la part de produit de protection pare-flammes dans le mélange de matériaux est entre 20 % en poids et 80 % en poids, de préférence entre 40 % en poids et 60 % en poids, ledit produit de protection pare-flammes étant de préférence exempt d'halogène.

4. Revêtement de sol selon l'une des revendications 1 à 3, **caractérisé en ce que** le produit de protection pare-flammes présente un diamètre de particules moyen qui s'élève entre 0,2 µm et 50 µm, de préférence entre 0,5 µm et 10 µm, et la surface spécifique selon BET s'élève de préférence entre 0,2 m²/g et 22 m²/g, en particulier entre 5 m²/g et 15 m²/g, et dans lequel le produit de protection pare-flammes présente de préférence une capacité d'absorption d'huile qui s'élève entre 10 mg/100 g et 65 mg/100 g, de préférence entre 25 mg/100 g et 40 mg/100 g.

5. Revêtement de sol selon l'une des revendications 1 à 4, **caractérisé en ce que** la part de produit de charge s'élève entre 5 % en poids et 18 % en poids, de préférence entre 8 % en poids et 16 % en poids, et les produits de charge sont de préférence inorganiques.

6. Revêtement de sol selon l'une des revendications 1 à 5, **caractérisé en ce que** le mélange de matériaux comprend des additifs, et de préférence des agents auxiliaires de traitement.

7. Revêtement de sol selon l'une des revendications 1 à 6, **caractérisé en ce que** la couche de couverture (13) est composée d'une pluralité de bandes (13a, 13b, 13c) qui sont agencées les unes à côté des autres.

8. Revêtement de sol selon l'une des revendications 1 à 7, **caractérisé par**
une couche porteuse (11) et
une couche de colle (12) ;
la couche de couverture (13) étant appliquée sur la couche porteuse (11) au moyen de la couche de colle (12).

9. Revêtement de sol selon la revendication 8, **caractérisé en ce que** la couche porteuse (11) est constituée d'un stratifié de résine phénolique et/ou d'un stratifié cyanate-ester et/ou d'un textile, dans lequel la couche porteuse (11) est de préférence composée d'une pluralité de bandes (11a, 11b, 11c) qui sont agencées les unes à côté des autres.

10. Revêtement de sol selon la revendication 9, **caractérisé en ce que** les bandes (13a, 13 b, 13c) de la couche de couverture (13) et les bandes (11 a, 11 b, 11 c) de la couche porteuse (11) sont agencées en décalage les unes par rapport aux autres.

11. Revêtement de sol selon l'une des revendications 7 à 10, **caractérisé par** un moyen de liaison (14), qui est agencé entre les bandes (13a, 13b, 13c) de la couche de couverture (13), et de préférence **caractérisé par** une feuille protectrice (15), qui relie les bandes (11a, 11b, 11c) de la couche porteuse (11) les unes avec les autres.

12. Revêtement de sol selon la revendication 11, **caractérisé en ce que** la feuille protectrice (15) est appliquée sur le côté de la couche porteuse (11) détourné de la couche de colle (12), ladite feuille protectrice (15) étant de préférence une bande d'aluminium ou de polypropylène.

13. Revêtement de sol selon l'une des revendications 1 à 12, **caractérisé par** un premier tronçon de revêtement de sol (16a), qui est composé d'une couche de couverture (13a), d'une couche porteuse (11a) et d'une couche de colle (12), et par un second tronçon de revêtement de sol (16b), qui est composé d'une couche de couverture (13b), d'une couche porteuse (11b) et d'une couche de colle (12), dans lequel le premier tronçon (16a) et le second tronçon (16b) sont agencés l'un à côté de l'autre et sont reliés l'un à l'autre par un moyen de liaison (14), et dans lequel la couche porteuse (11a) du premier tronçon (16a) et la couche porteuse (11b) du second tronçon (16b) sont reliées l'une à l'autre par une feuille protectrice (15).

14. Revêtement de sol selon l'une des revendications 1 à 13, **caractérisé** de préférence par un poids surfacique de 2 kg/m² à 3 kg/m², et **caractérisé** de préférence par une hauteur de 1 mm à 3 mm, de préférence de 1,2 mm à 2,0 mm.
